# EUROPEAN PATENT APPLICATION

(11) **EP 1 630 646 A1**
(43) Date of publication of application: **01.03.2006**
(21) Application number: 04255238.0
(22) Date of filing: 31.08.2004
(51) Int. Cl.: G06F 3/023

(54) **Handheld electronic device providing visual indication of input routine, and associated method**

(71) Applicant: Research In Motion Limited, Waterloo, Ontario N2L 3W8 (CA)
(72) Inventor: Scott, Sherryl Lee Lorraine, Toronto, Ontario, Canada M5T 1Y9 (CA)
(74) Representative: Hibbert, Juliet Jane Grace

(57) **Abstract**

An improved handheld electronic device and an associated method provide a visual indication that a particular input routine from among a plurality of input routines is active on the handheld electronic device. The visual indication of the active input routine can be provided as a visual depiction on a display of the handheld electronic device or can be provided in other fashions. The visual indication can be disposed at a generally fixed location on the display or can be disposed in the vicinity of a movable cursor on the display, and can even take the place of the cursor. Such a visual indication can be provided for all of the various input routines that are activatable on the handheld electronic device or only for certain of the input routines.

## Description

### BACKGROUND OF THE INVENTION

### Field of the Invention

The invention relates generally to handheld electronic devices and, more particularly, to a handheld electronic device that in certain circumstances provides a visual indication representative of an input routine that is active on the handheld electronic device, as well as an associated method.

### Background of the Invention

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable, and thus are relatively small. Many handheld electronic devices also feature wireless communication capability, although many such handheld electronic devices are stand-alone devices that are functional without communication with other devices. With advances in technology, handheld electronic devices are being configured to include greater numbers of features while having relatively smaller form factors.

Some handheld electronic devices feature a keypad in the form or a "reduced keyboard" in which multiple letters, other linguistic elements, symbols, and/or digits, and the like are assigned to any given key. For instance, any given key might have a plurality of letters, a digit, a symbol, and a function assigned thereto, although numerous different types of arrangements are possible. In order to enable a user to make use of the multiple letters, digits, and the like on any given key, numerous keystroke interpretation systems have been proposed. One such type of system is a disambiguation system that seeks to interpret the keystrokes entered by a user into a text output that is likely to have been intended by the user based upon probability distributions and other methodologies. As a general matter, such disambiguation systems transform an ambiguous key input into a predicted output.

Other keystroke interpretation systems are configured to interpret key input as unambiguous input and responsively provide unambiguous output. For instance, a "multitap" system allows a user to substantially unambiguously specify a particular character on a key by pressing the same key a number of times equivalent to the desired position of the character in a row of characters on the key. For instance, if a given key included the letters "ABC" and the user desired to specify the letter "C", the user would press the key three times in succession.

Alternatively, a "numeric" input system outputs from any given keystroke only a digit that is assigned to the key. Such systems typically will provide no output if no digit or other numeric symbol is assigned to the key.

In certain circumstances, it is desirable that a given handheld electronic device with a reduced keyboard provide both a disambiguation input routine for certain text input situations as well as a multitap and/or a numeric input routine for input in different predetermined circumstances. While such systems have been generally effective for their intended purposes, such systems have not been without limitation inasmuch as it is sometimes unclear to a user which of the several input routines is active on the handheld electronic device at any give time. It thus would be desirable to provide an improved handheld electronic device that overcomes such shortcomings by providing a visual indication or other indication of the particular input routine that is active at any given time on the handheld electronic device.

### SUMMARY OF THE INVENTION

An improved handheld electronic device and an associated method provide a visual indication that a particular input routine from among a plurality of input routines is active on the handheld electronic device. The visual indication of the active input routine can be provided as a visual depiction on a display of the handheld electronic device or can be provided in other fashions. The visual indication can be disposed at a generally fixed location on the display or can be disposed in the vicinity of a movable cursor on the display, and can even take the place of the cursor. Such a visual indication can be provided for all of the various input routines that are activatable on the handheld electronic device or only for certain of the input routines.

Accordingly, an aspect of the invention is to provide an improved handheld electronic device that provides a visual indication of an input routine that is active on the handheld electronic device.

Another aspect of the invention is to provide an improved handheld electronic device having a reduced keyboard that provides to the user an indication of the type of output that can be expected from a given key input.

Another aspect of the invention is to provide an improved handheld electronic device that facilitates input into the handheld electronic device in various predetermined circumstances.

Another aspect of the invention is to provide an improved method of facilitating input into a handheld electronic device by providing a visual indication of a particular input routine that is active on the handheld electronic device.

Accordingly, an aspect of the invention is provide an improved method of providing information about a handheld electronic device, with the handheld electronic device including a processor apparatus, a display, and an input apparatus having a number of input members. Each of at least a portion of the input members of the number of input members have a plurality of characters assigned thereto, the plurality of characters of each of at least a portion of the at least a portion of the input members including a plurality of alphabetic characters, the plurality of characters of each of at least a portion of the at least a portion of the input members including at least a first alphabetic character and at least a first numeric character. The processor apparatus includes a memory and a plurality of routines, with the plurality of routines including a plurality of input routines. The general nature of the method can be stated as including executing on the handheld electronic device a first input routine of the plurality of input routines, the first input routine being a disambiguation routine that, responsive to an actuation by a user of an input member of the at least a portion of the input members having a plurality of alphabetic characters assigned thereto, is adapted to output an alphabetic character of the plurality of alphabetic characters assigned to the input member that is predicted to be the alphabetic character intended by the user, activating on the handheld electronic device a second input routine of the plurality of input routines, the second input routine being an input routine that, responsive to an actuation by a user of an input member of the at least a portion of the input members, is adapted to output a character of the plurality of characters assigned to the input member as an unambiguous interpretation of the actuation of the input member, and displaying on the display a first visual indication, the first visual indication being representative of the second input routine.

Another aspect of the invention is provide an improved handheld electronic device, the general nature of which can be stated as including a processor apparatus including a memory and a plurality of routines, the plurality of routines including a plurality of input routines, a display, and an input apparatus having a number of input members. Each of at least a portion of the input members of the number of input members has a plurality of characters assigned thereto, the plurality of characters of each of at least a portion of the at least a portion of the input members including a plurality of alphabetic characters, the plurality of characters of each of at least a portion of the at least a portion of the input members including at least a first alphabetic character and at least a first numeric character. The processor apparatus is adapted to execute a first input routine of the plurality of input routines, the first input routine being a disambiguation routine that, responsive to an actuation by a user of an input member of the at least a portion of the input members having a plurality of alphabetic characters assigned thereto, is adapted to output an alphabetic character of the plurality of alphabetic characters assigned to the input member that is predicted to be the alphabetic character intended by the user. The processor apparatus is adapted to execute a second input routine of the plurality of input routines, the second input routine being an input routine that, responsive to an actuation by a user of an input member of the at least a portion of the input members, is adapted to output a character of the plurality of characters assigned to the input member as an unambiguous interpretation of the actuation of the input member. The display is adapted to display a first visual indication, the first visual indication being representative of the second input routine.

### BRIEF DESCRIPTION OF THE DRAWINGS

A full understanding of the invention can be gained from the following Description of the Preferred Embodiment when read in conjunction with the accompanying drawings which:
Fig. 1 is a top plan view of an improved handheld electronic device in accordance with the invention that provides an improved method in accordance with the invention;
Fig. 2 is an exemplary flowchart depicting the improved method of the invention;
Fig. 2A is a schematic depiction of the improved handheld electronic device of Fig. 1;
Fig. 3A is an exemplary output on the handheld electronic device of Fig. 1;
Fig. 3B is an exemplary output on the handheld electronic device of Fig. 1;
Fig. 3C is an exemplary output on the handheld electronic device of Fig. 1;
Fig. 3D is an exemplary output on the handheld electronic device of Fig. 1;
Fig. 3E is an exemplary output on the handheld electronic device of Fig. 1;
Fig. 3F is an exemplary output on the handheld electronic device of Fig. 1;
Fig. 3G is an exemplary output on the handheld electronic device of Fig. 1;
Fig. 3H is an exemplary output on the handheld electronic device of Fig. 1;
Fig. 3I is an exemplary output on the handheld electronic device of Fig. 1;
Fig. 3J is an exemplary output on the handheld electronic device of Fig. 1;
Fig. 3K is an exemplary output on the handheld electronic device of Fig. 1;
Fig. 3L is an exemplary output on the handheld electronic device of Fig. 1; and
Fig. 4 is a flowchart depicting a portion of the method of the invention.

Similar numerals refer to similar parts throughout the specification.

### DESCRIPTION OF THE PREFERRED EMBODIMENT

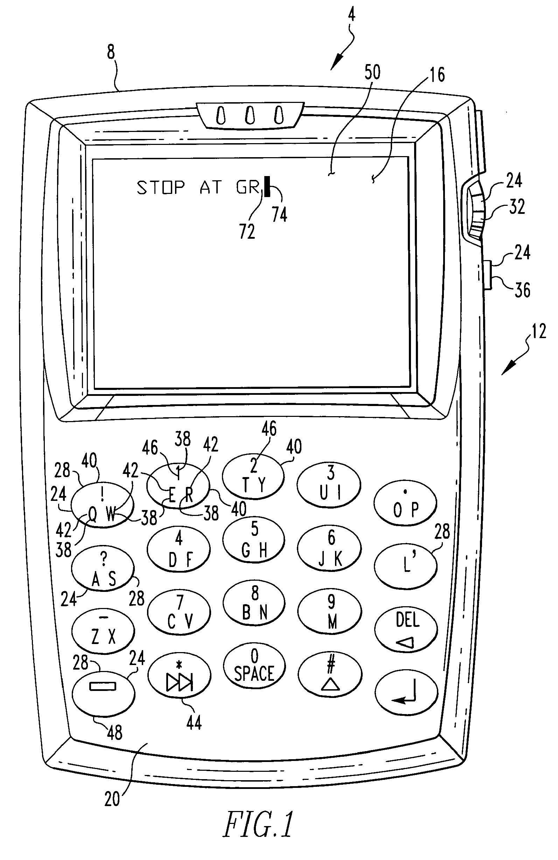

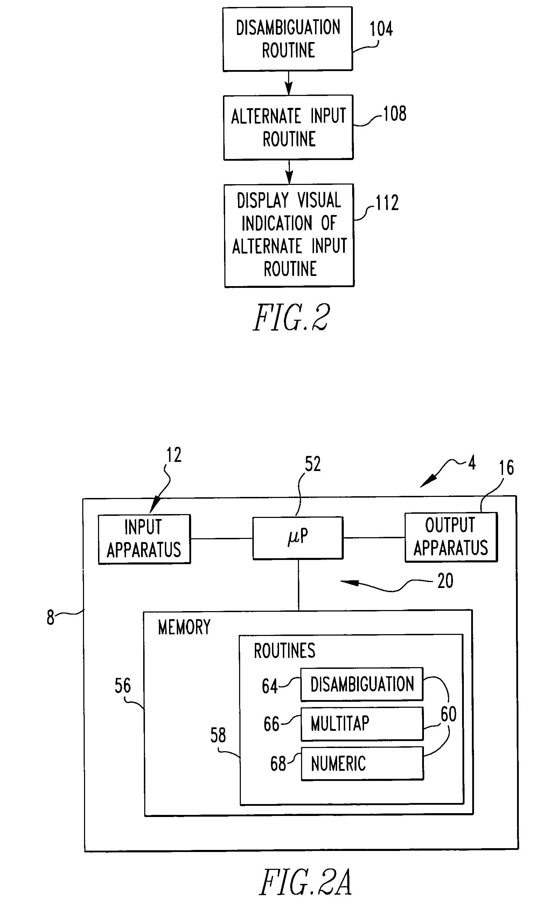

An improved handheld electronic device 4 in accordance with the invention is indicated generally in Fig. 1 and is depicted schematically in Fig. 2A. The exemplary handheld electronic device 4 includes a housing 8 upon which are disposed an input apparatus 12, an output apparatus, 16 and a processor apparatus 20. The input apparatus 12 includes a plurality of input members 24 that can be said to include a plurality of keys 28, a rotatable track wheel 32, and an <ESCAPE> key 36. The keys 28 include a plurality of alphanumeric keys 40, a special <NEXT> key 44, and an <ALT> key 48.

As can be understood from Fig. 1, the alphanumeric keys 40 generally each include a plurality of linguistic elements such as the characters 38. On any given key, the characters 38 can include one or more alphabetic characters 42 and a numeric character 46. The alphabetic characters might, for instance, include the twenty-six Roman letters, and the numeric characters 46 might include the ten Arabic digits. In other embodiments, the <NEXT> key 44 and/or the <ALT> 48 may not include any characters 38 and may rather provide only a functional input when actuated.

The output apparatus 16 includes a display 50. The output apparatus 60 can additionally include, for instance, additional indicators such as lights, and the like, and can additionally include an audible output such as a speaker as well as other output devices.

The processor apparatus 20 includes a processor 52 that can be, for instance, and without limitation, a microprocessor (µP), and is responsive to inputs from the input apparatus 12 and provides output signals to the output apparatus 16. The processor apparatus 20 further includes memory 56 that includes a number of routines 58 stored thereon. As employed herein, the expression "a number of'' and variations thereof shall refer broadly to any non-zero quantity including a quantity of one. The processor 52 interfaces with the memory 56, and the routines 58 are executable on the processor 52.

The routines 58 include a number of input routines 60 that are executable on the processor 52 and that are used to transform inputs from the input members 24 into outputs that are provided to the output apparatus 16. The input routines 60 in the present exemplary embodiment include a disambiguation routine 64, a multitap routine 66, and a numeric routine 68. It is understood that additional and/or other routines, including other input routines, can be provided on the handheld electronic device 4 without departing from the concept of the invention. In accordance with the invention, visual indications representative of certain of the input routines 60 are provided on the handheld electronic device 4 when such input routines 60 are active on the processor 52.

The method of the invention is indicated in general terms in the flowchart of Fig. 2. For most of the text input activities on the handheld electronic device 4, the disambiguation routine 64 is active on the processor 52, as is indicated at 104. Upon the occurrence of a predetermined event, however, an alternate input routine 60 is activated on the processor 52, as is indicated at 108. In the present example, the alternate input routine 60 can be, for instance, either the multitap routine 66 or the numeric routine 68 or other routine as may be provided. As a general matter, only one of the plurality of input routines 60 will typically be active on the processor 52 at any given time, meaning that upon activating either the multitap routine 66 or the numeric routine 68, as at 108, the disambiguation routine 64 will typically be deactivated on the processor 52, at least temporarily.

Upon activation of either the multitap routine 66 or the numeric routine 68, a signal is sent to the output apparatus 16 which causes the display 50 to display a visual indication 80 that the given alternate input routine 60 is active on the processor 52, as at 112. The display of such visual indication 80 facilitates the entry of input into the handheld electronic device 4 since it provides an indication to the user of how the various actuations of the alphanumeric keys 40 will be interpreted on the handheld electronic device 4 and will ultimately be output to the display 50.

In Fig. 1, the handheld electronic device 4 is depicted with the disambiguation routine 64 being active thereon. In the exemplary embodiment, the disambiguation routine 64 permits the entry of text into a text input field 72, with the active portion of the text input field 72 being indicated by a cursor 74. The generic cursor 74 is depicted in Fig. 1 as being a vertical bar that generally indicates the location where additional text will be entered upon actuation of one of the alphanumeric keys 40. During most text entry on the handheld electronic device 4, the disambiguation routine 64 will be active on the processor 52 as a default input routine 60, although other input routines 60 can be provided as a default depending on the circumstances of the application. As a general matter, the exemplary disambiguation routine 64 interprets actuations of the alphanumeric keys 40 in order to predict the input that was intended by the user, and such intent can be derived, for instance, by probability distributions and/or algorithms and the like on the processor 52, although other disambiguation schemes can be provided as the disambiguation routine 64.

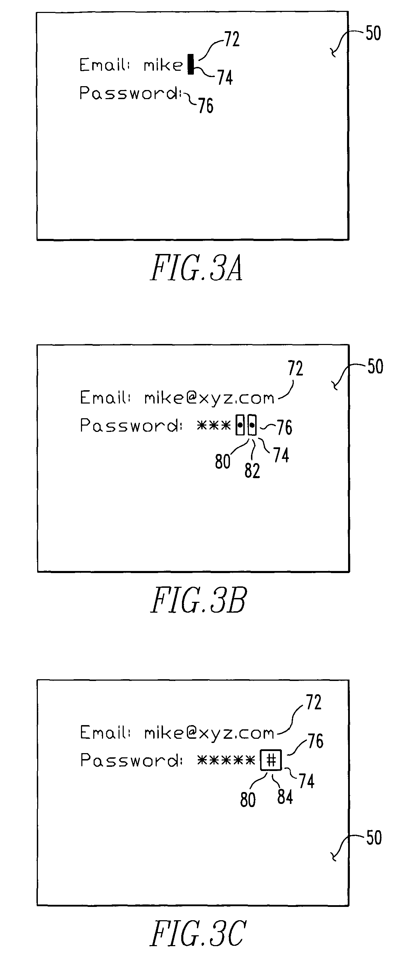

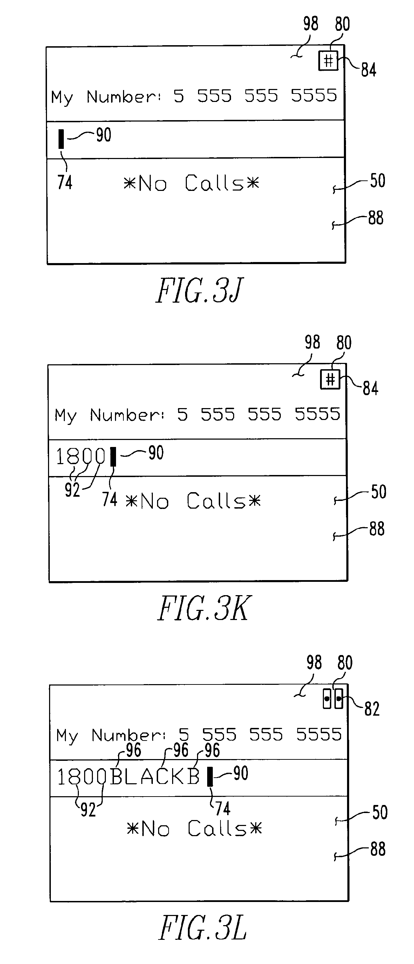

An exemplary e-mail creation dialog is depicted in Fig. 3A. The e-mail creation dialog includes, in the instant example, the text entry field 72 and a password field 76. In Fig. 3A, the text input field 72 is active and text is being input into the text input field 72 by way of the disambiguation routine 64 that is active on the processor 52. The active location on the text input field 72 in Fig. 3A is indicated by the presences of the cursor 74.

In Fig. 3B, text entry into the text input field 72 has been completed, and the password field 76 is active. The active location in the password field 76 is indicated by a visual indication 80 that is depicted in the password field 76. In the depicted example of Fig. 3B, the visual indication 80 is a multitap icon 82 and serves as the cursor, i.e., takes the place of the cursor 74.

In the instant example depicted in Fig. 3B, upon activation of the password field 76, the disambiguation routine 64 is deactivated and the multitap routine 66 is activated on the processor 52. Activation of the multitap routine 66 is visually depicted by the visual indication 80 in the form of the multitap icon 82. Upon seeing the multitap icon 82, the user will be informed that the multitap routine 66 is active on the processor 52 and that actuations of the alphanumeric keys 40 will be interpreted as multitap inputs that will result in corresponding multitap output to the password field 76.

As can be seen in Fig. 3B, the previous outputs depicted to the left of the multitap icon 82 are shown as asterisks. The asterisks represent alphanumeric inputs that are not expressly depicted but that are indicated as having been entered. Specifically, inputs from the alphanumeric keys 40 are interpreted by the active input routine 60 and are displayed explicitly for only a short period of time, i.e., a few seconds, before they are replaced with asterisks. This is done generally for reasons of security and is a default mode of operation on the device 4 for password insertion. As such, despite the output not being expressly depicted in the password field 76, the multitap icon 82 serves as the visual indication 80 that indicates to the user that the multitap routine 66 is active on the processor 52 and that actuations of the alphanumeric keys 40 will be interpreted as multitap inputs.

In the present exemplary embodiment, the multitap routine 66 interprets actuations of one of the alphanumeric keys 40 as being multitap inputs. Specifically, any given alphanumeric key 40 is actuated a given quantity of times as indicated by the position of the intended character 38 on the alphanumeric key 40. For instance, if the alphanumeric key 40 including the alphabetic characters 42 "D" and "F" were actuated twice, the two actuations of such key 40 would be interpreted as an unambiguous input of the letter "F". In the present depicted exemplary embodiment, the numeric characters 46 of any given alphanumeric key 40 are not selectable using the multitap routine 66 and rather can be obtained only upon activation of the numeric routine 68. In other embodiments, however, the multitap routine 66 potentially could be configured to interpret both alphabetic characters 42 and numeric characters 46 without departing from the concept of the invention.

As can be seen in Fig. 3C, further inputs have been provided in the password field 76, as can be understood by the additional asterisks beyond those depicted in Fig. 3B. Additionally, the visual indication 80 has changed from the multitap icon 82 of Fig. 3B to a numeric icon 84 in Fig. 3C. The numeric icon 84 indicates that the numeric routine 68 is active on the processor 52. As such, actuations of alphanumeric keys 40 having a numeric character 46 assigned thereto will be interpreted as numeric inputs and will result in numeric outputs, it being reiterated that outputs in the exemplary password field 76 are expressly depicted only for a short period of time before being replaced by asterisks. Depiction of the numeric icon 84 indicates that the multitap routine 66 is no longer active on the handheld electronic device 4, and indicates that the numeric routine 68 is active.

By way of example, the particular input routine 60 that is active at any given time on the handheld electronic device 4 can be selected by a specific type of actuation of the <NEXT> key 44 or the <ALT> key 48. Specifically, a press-and-release actuation of the <NEXT> key 44 will alternate the active input routine 60 between the multitap routine 66 and the numeric routine 68. In alternate embodiments, the <NEXT> key 44 potentially be configured to additionally select the disambiguation routine 64 from among the input routines 60 without departing from the concept of the invention. Additionally, a press-and-hold actuation of the <ALT> key 48 will temporarily activate the numeric routine 68 if the multitap routine 66 is then active on the processor 52, and vice versa. The other of the numeric routine 68 and the multitap routine 66 will revert back to being the active input routine 60 upon releasing the <ALT> key 48 after a press-and-hold actuation. Actuations of either the <NEXT> key 44 or the <ALT> key 48 may have been used to activate the numeric routine 68 as is depicted in Fig. 3C by the depiction of the numeric icon 84 as the visual indication 80.

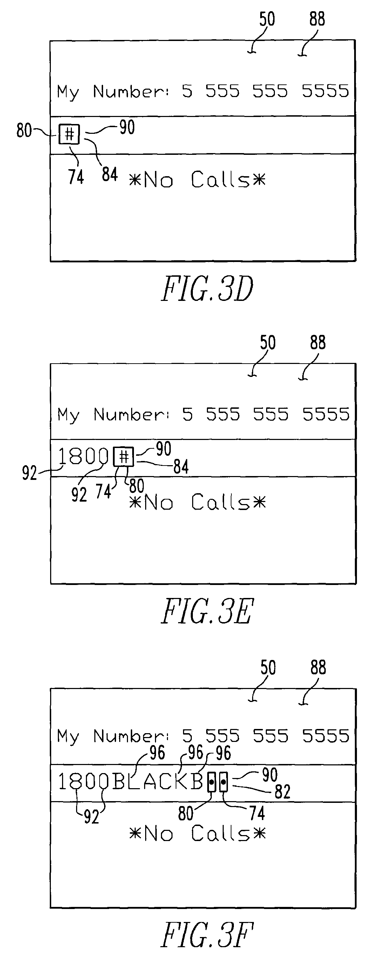

A further example is depicted in Fig. 3D which depicts an exemplary telephone dialing dialog 88 on the display 50. Upon activation of the telephone dialing dialog 88, a telephone number field 90 is provided, and the numeric routine 68 is activated as the default input routine 60 in the telephone number field 90. As such the numeric icon 84 is provided as the visual indication 80 in the telephone number field 90.

In Fig. 3E, a number of digits 92 are depicted as having been entered in the telephone number field 90. Such digits 92 were derived by actuations of alphanumeric keys 40 with resultant interpretations of such key actuations having been performed by the numeric routine 68 that was then active on the processor 52.

In Fig. 3F, it can be seen that the multitap routine 66 is active on the processor 52 as in indicated by the display of the multitap icon 82 as the visual indication 80. Additionally, Fig. 3F depicts a number of letters 96 having been input in the telephone number field 90. Such letters 96 have resulted from actuations of the alphanumeric keys 40 with resultant interpretation by the multitap routine 66 to provide the numbers 96. As can be understood from Fig. 3F, therefore, the multitap icon 82 which is provided as the visual indication 80 indicates to a user that the multitap routine 66 is currently active on the processor 52 and that actuations of the alphanumeric keys 40 will be interpreted as multitap inputs and will result in multitap outputs which, in the present example, are the letters 96.

As can be understood from Figs. 3A-3F, the visual indication 80 is provided as the cursor 74. Specifically, in Fig. 3A the disambiguation routine 64 is active and the visual indication 80 of the disambiguation routine 64 is the cursor 74 in a generic form. In Fig. 3B, however, the visual indication 80 is in the form of the multitap icon 82 serving as the cursor 74. Similarly, in Fig. 3C, the numeric icon 84 serves as the visual indication 80 and appears as the cursor 74, which indicates that the numeric routine 68 is active on the handheld electronic device 4.

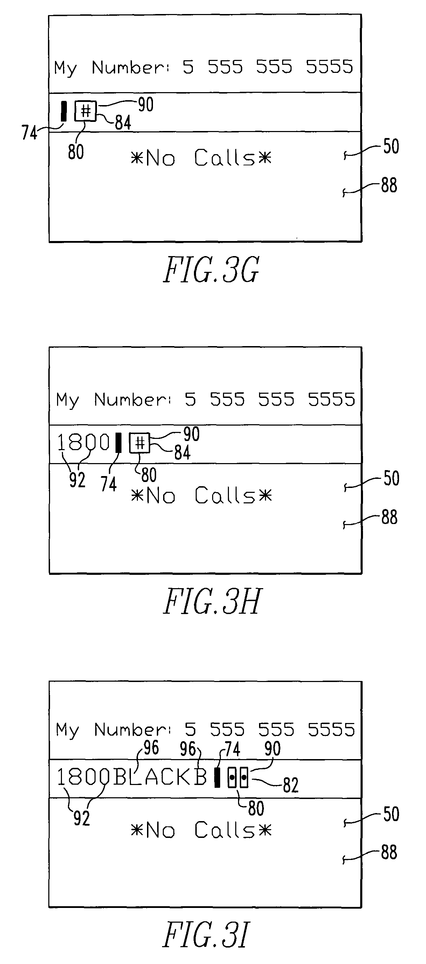

In contrast, the visual indication 80 depicted in Figs. 3G, 3H, and 3I are provided as a visual indication 80 in addition to and in the vicinity of the depicted cursor 74. Specifically, Fig. 3G depicts the cursor 74, and in the vicinity of the cursor 74 provides the numeric icon 84 as the visual indication 80. The same visual indication 80 is depicted in Fig. 3H. In Fig. 3I, the multitap icon 80 provides a visual indication 80 that is depicted in the vicinity, i.e., adjacent the cursor 74 which is also depicted. Such visual indications 80 that are provided adjacent the depicted cursor 74 provide another fashion in which the user can be apprised of which of the input routines 60 is active on the processor 52. For instance, if the disambiguation routine 64 is active, the cursor 74 will be provided by itself. It is understood that such depiction of the visual indication 80 in addition to the cursor 74 can be provided in conjunction with any dialog on the handheld electronic device 4, such as the e-mail creation dialog depicted in Figs. 3A-3C and the generic text entry dialog of Fig. 1.

Still another exemplary depiction of the visual indication 80 is provided in Figs. 3J-3L. Instead of providing the visual indication 80 adjacent the cursor 74, the visual indication 80 is provided in an indication region 98 that is generally stationary on the display 50, and is, for example, provided in the upper right corner of the display 50, although other locations can be provided without departing from the concept of the invention. In Figs. 3J and Fig. 3K, the numeric icon 84 is provided as the visual indication 80 at the indication region 98, while the cursor 74 is depicted at the active input location. In Fig. 3L, the multitap icon 82 is provided as the visual indication 80 in the indication region 98. The visual indication 80 provided in Figs. 3J-3L is consistently provided at the indication region 98 which is substantially stationary on the display 50 so that the user can always reference a particular location on the display 50, i.e., the indication region 98, in order to quickly ascertain which of the input routines 60 is active on the handheld electronic device 4. The depiction of the visual indication 80 at the indication region 98 can be selected by the user if this type of indication methodology is desired.

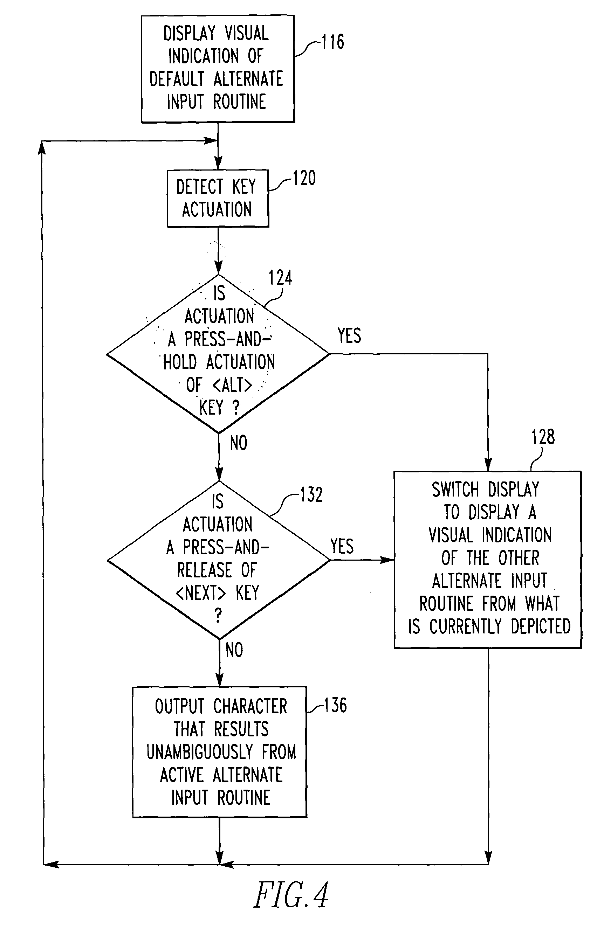

An exemplary flowchart of a portion of the method of the invention is depicted generally in Fig. 4. As indicated above, the exemplary default input routine 60 on the handheld electronic device 4 is the disambiguation routine 64. However, the multitap routine 66 is the default input routine 60 for the password field of the e-mail creation dialog, and the numeric routine 68 is the default input routine 60 of the telephone dialing dialog 88. Upon the occurrence of a predetermined event such as the activation of the telephone dialing dialog 88 or the e-mail creation dialog, an output is sent to the display 50 to display the visual indication 80 representative of such alternate default input routine. The display of the visual indication is indicated at the numeral 116 in Fig. 4.

Subsequently, an actuation of one of the keys 28 is detected at 120. It is then determined, as at 124, whether the actuation of the key 28 is a press-and-hold actuation of the <ALT>. If so, whichever of the multitap routine 66 and the numeric routine 68 is not active on the processor 52 is then activated on the processor 52, and whichever of the multitap icon 82 and numeric icon 84 is appropriate for the recently activated input routine 60 is then output to the display 50 as a visual indication 80, as at 128.

If it is determined at 124, that the actuation of the key 28 is not a press-and-hold actuation of the <ALT> key 48, processing continues at 132 where it is determined whether the actuation of the key 28 is a press-and-release of the <NEXT> key 44. If the actuation is determined to a press-and-release of the <NEXT>key 44, processing is directed to 128 where an opposite input routine 60 is activated on the processor 52 and the corresponding visual indication 80 is provided on the display 50.

If it is determined at 132 that the actuation of the key 28 was not a press-and-release actuation of the <NEXT>key 44, processing continues, as at 136, where the input is interpreted according to whichever of the multitap routines 66 and the numeric routine 68 is active on the processor 50, and a corresponding output is provided.

By providing the visual indication 80, the user is apprised of which of the input routines 60 is then active on the handheld electronic device, which facilitates input into the handheld electronic device 4. It also helps to generally avoid the need to provide corrective inputs that might be based upon an incorrect assumption of which of the input routines 60 had been active on the handheld electronic device 4 at any given time.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method of providing information about a handheld electronic device, the handheld electronic device including a processor apparatus, a display, and an input apparatus having a number of input members, each of at least a portion of the input members of the number of input members having a plurality of characters assigned thereto, said plurality of characters of each of at least a portion of said at least a portion of the input members including a plurality of alphabetic characters, said plurality of characters of each of at least a portion of said at least a portion of the input members including at least a first alphabetic character and at least a first numeric character, the processor apparatus including a memory and a plurality of routines, the plurality of routines including a plurality of input routines, the method comprising:
executing on the handheld electronic device a first input routine of the plurality of input routines, the first input routine being a disambiguation routine that, responsive to an actuation by a user of an input member of said at least a portion of the input members having a plurality of alphabetic characters assigned thereto, is adapted to output an alphabetic character of the plurality of alphabetic characters assigned to said input member that is predicted to be the alphabetic character intended by the user;
activating on the handheld electronic device a second input routine of the plurality of input routines, the second input routine being an input routine that, responsive to an actuation by a user of an input member of said at least a portion of the input members, is adapted to output a character of the plurality of characters assigned to said input member as an unambiguous interpretation of the actuation of said input member; and
displaying on the display a first visual indication, the first visual indication being representative of the second input routine.

2. The method of Claim 1, further comprising displaying a cursor on the display, and displaying as the first visual indication one of:
an output being displayed adjacent the cursor; and
an output being at least a portion of the cursor.

3. The method of Claim 1, further comprising
detecting an actuation of a predetermined input member of the number of input members; and
responsive to said detecting an actuation of a predetermined input member, activating on the handheld electronic device a third input routine of the plurality of input routines, and displaying on the display a second visual indication, the second visual indication being representative of the third input routine.

4. The method of Claim 3, further comprising detecting another actuation of the predetermined input member and, responsive to said detecting another actuation of the predetermined input member, activating the second input routine and displaying on the display the first visual indication.

5. The method of Claim 3, further comprising
detecting as the actuation of the predetermined input member a press-and-hold actuation of the predetermined input member;
detecting a release of the predetermined input member; and
responsive to said detecting the release of the predetermined input member, activating the second input routine and displaying on the display the first visual indication.

6. The method of Claim 1, further comprising determining that a system focus is on a predetermined input field and, responsive to said determining that a system focus is on a predetermined input field, activating the second input routine as a default input routine for the predetermined input field, and displaying as the first visual indication a default visual indication.

7. The method of Claim 1, further comprising activating on the handheld electronic device a predetermined routine from among the plurality of routines and, responsive to said activating on the handheld electronic device a predetermined routine, activating the second input routine.

8. A handheld electronic device comprising:
a processor apparatus including a memory and a plurality of routines, the plurality of routines including a plurality of input routines;
a display; and
an input apparatus having a number of input members;
each of at least a portion of the input members of the number of input members having a plurality of characters assigned thereto, said plurality of characters of each of at least a portion of said at least a portion of the input members including a plurality of alphabetic characters, said plurality of characters of each of at least a portion of said at least a portion of the input members including at least a first alphabetic character and at least a first numeric character;
the processor apparatus being adapted to execute a first input routine of the plurality of input routines, the first input routine being a disambiguation routine that, responsive to an actuation by a user of an input member of said at least a portion of the input members having a plurality of alphabetic characters assigned thereto, is adapted to output an alphabetic character of the plurality of alphabetic characters assigned to said input member that is predicted to be the alphabetic character intended by the user;
the processor apparatus being adapted to execute a second input routine of the plurality of input routines, the second input routine being an input routine that, responsive to an actuation by a user of an input member of said at least a portion of the input members, is adapted to output a character of the plurality of characters assigned to said input member as an unambiguous interpretation of the actuation of said input member; and
the display being adapted to display a first visual indication, the first visual indication being representative of the second input routine.

9. The handheld electronic device of Claim 8 wherein the display is adapted to display a cursor, and the display being adapted to display as the first visual indication one of:
an output being displayed adjacent the cursor; and
an output being at least a portion of the cursor.

10. The handheld electronic device of Claim 8 wherein
the processor apparatus is adapted to detect an actuation of a predetermined input member of the number of input members; and
responsive to detection of the actuation of the predetermined input member, the processor apparatus being adapted to activate a third input routine of the plurality of input routines, and the display being adapted to display a second visual indication, the second visual indication being representative of the third input routine.

11. The handheld electronic device of Claim 10 wherein the processor apparatus is adapted to detect another actuation of the predetermined input member and, responsive to a detection of another actuation of the predetermined input member, the processor apparatus being adapted to activate the second input routine and the display being adapted to display the first visual indication.

12. The handheld electronic device of Claim 10 wherein the processor apparatus is adapted to detect as the actuation of the predetermined input member a press-and-hold actuation of the predetermined input member;
the processor apparatus being adapted to detect a release of the predetermined input member; and
responsive to detecting the release of the predetermined input member, the processor apparatus being adapted to activate the second input routine and the display being adapted to display the first visual indication.

13. The handheld electronic device of Claim 8 wherein the processor apparatus is adapted to determine that a system focus is on a predetermined input field and, responsive to determining that the system focus is on the predetermined input field, the processor apparatus being adapted to activate the second input routine as a default input routine for the predetermined input field and the display being adapted to display as the first visual indication a default visual indication.

14. The handheld electronic device of Claim 8 wherein the processor apparatus is adapted to activate a predetermined routine from among the plurality of routines and, responsive to activating the predetermined routine, the processor apparatus being adapted to activate the second input routine.
